## Europäisches Patentamt
## European Patent Office
## Office européen des brevets

(19)

(11) Veröffentlichungsnummer: **0 171 587**
**B1**

(12) # EUROPÄISCHE PATENTSCHRIFT

(45) Veröffentlichungstag der Patentschrift:
27.04.88

(51) Int. Cl.⁴: **F 16 C 33/74**

(21) Anmeldenummer: **85108353.5**

(22) Anmeldetag: **05.07.85**

(54) **Gleitlager.**

(30) Priorität: **30.07.84 DE 3428117**

(43) Veröffentlichungstag der Anmeldung:
**19.02.86 Patentblatt 86/8**

(45) Bekanntmachung des Hinweises auf die Patenterteilung:
**27.04.88 Patentblatt 88/17**

(84) Benannte Vertragsstaaten:
**AT DE FR IT SE**

(56) Entgegenhaltungen:
**DE-A-1 955 166**
**DE-B-1 286 623**
**FR-A-2 196 540**
**GB-A-1 183 469**

(73) Patentinhaber: **Siemens Aktiengesellschaft Berlin und München, Wittelsbacherplatz 2, D-8000 München 2 (DE)**

(72) Erfinder: **Weigand, Walter, Wagstädter Strasse 30, D-8740 Bad Neustadt/Saale (DE)**

LIBER, STOCKHOLM 1988

EP 0 171 587 B1

## Beschreibung

Die Erfindung betrifft ein Gleitlager, dessen Lagerkörper in einer Lageraufnahme angeordnet und bei dem zu beiden Seiten der Lagereufnahme den Lagerkörper nach außen abschirmende, ein Lagergehäuse bildende Lagerkappen vorgesehen sind, welches Lager ferner ein Schmiermitteldepot aufweist und bei dem an jeder Stirnseite des Lagerkörpers zwischen diesem und der Innenstirnseite der jeweiligen Lagerkappe eine Dichtscheibe eingefügt ist.

Mit solchen als Kalottenlager ausgebildeten Gleitlegern sind die Gebläseaggregate von auf dem Markt befindlichen Staubsaugern ausgerüstet. Die Dichtscheiben weisen bei diesen Kalottenlagern einen Durchmesser auf, der kleiner oder höchstens gleich dem Durchmesser der eben ausgebildeten Stirnseite der Lagerkappen ist. Die axialen Abmessungen des durch die Lagerkappen gebildeten Gehäuses der Kalotte sind so gewählt, daß die Dichtscheiben normalerweise zwischen den Stirnseiten der Lagerkeppen und der Kalotte eingeklemmt und dadurch gegen Verdrehen gesichert sind. Es hat sich jedoch gezeigt, daß bei einer solchen Ausbildung des Kalottenlagers schon bei geringen Toleranzen der vorerwähnten axialen Abmessungen die Dichtscheiben nicht mehr ausreichend festgeklemmt werden und dann mit der Welle mitrotieren. Dadurch wird die Dichtwirkung dieser Scheiben stark beeinträchtigt. Außerdem ist an der Durchtrittsstelle der Welle durch die Dichtscheiben keine Abdichtung vorhanden, so daß beispielsweise von den Kohlebürsten des Gebläsemotors herrührender Kohlenstaub in das Lager eindringen bzw. Schmiermittel von dem Schmiermitteldepot nach außen aus dem Lager heraustreten kann.

Bei einem aus der FR-A-2 196 540 bekannten Kalottenlager wird die Lageraufnahme für die Kalottenschale durch eine Lagerschale und eine Klemmhülse gebildet. Die Lagerschale ist im Anschluß an ihren kalottenförmigen Bereich geradlinig nach radial innen verlängert und bildet somit eine Anlagefläche für eine auf der Stirnseite der Kalottenschale angeordnete Dichtscheibe. Infolge von Maßabweichungen zwischen der Kalottenschale und der Lagerschale ist ein Festklemmen der Dichtscheibe zwischen der Stirnseite der Kalottenschale und dem radial verlängerten Teil der Lagerschale nicht mit Sicherheit gewährleistet.

Dies gilt auch für ein aus der GB-A-1 183 469 bekanntes Kalottenlager, bei dem auf beiden Stirnseiten der Kalottenschale Dichtringe eingefügt sind. Da diese Dichtungen wiederum zwischen den Stirnseiten der Kalottenschale und einem radial nach innen verlängerten Teil von zwei die Kalottenschale aufnehmenden Lagerschalen eingeklemmt sind, ist bei Maßabweichungen zwischen den Lagerschalen und der Kalottenschale ein Festsitz der Dichtungen nicht mehr gegeben.

Der Erfindung liegt die Aufgabe zugrunde, ein Gleitlager der eingangs beschriebenen Art so auszubilden, daß die Dichtscheiben stets sicher festgeklemmt werden und daß sie das Lager auch an der Durchtrittsstelle der Welle abdichten.

Die Lösung der gestellten Aufgabe gelingt nach der Erfindung dadurch, daß die Lagerkappen in dem an ihre ebene Stirnseite angrenzenden Bereich einen stetig zunehmenden Durchmesser aufweisen, daß die aus einem biegeelastischen Material bestehenden Dichtscheiben zwischen der jeweiligen Stirnseite des Lagerkörpers und der Innenseite der betreffenden Lagerkappe dadurch axial verspannt sind, daß ihr Durchmesser etwas größer als der jeweilige Innendurchmesser der Lagerkappen an der in der Ebene der Lagerkörperstirnseite liegenden Stelle ist, daß ferner die Dichtscheiben mit ihrer Bohrung an der durch den Lagerkörper durchgeführten Welle anliegen. Durch diese Ausbildung der Lagerkappen und Bemessung der Dichtscheiben ergibt sich bei nicht eingesetztem Lagerkörper ein axialer Abstand zwischen den Dichtscheiben, der kleiner als die axiale Länge des Lagerkörpers ist. Hierdurch wird erreicht, daß der Lagerkörper trotz der Toleranzen seiner axialen Abmessungen und der axialen Abmessungen des durch die Lagerkappen gebildeten Lagergehäuses stets an den Dichtscheiben anliegt und diese in dem konisch verlaufenden Teil der Lagerkappen festpreßt. Hierbei legen sich die Dichtscheiben mit ihrem Umfangsrand an der Wandung der Lagerkappen an, wobei der Rand leicht nach innen umgebogen wird. Damit wird eine stetige Spannung erzeugt, die den Umfangsrand der Dichtscheiben in Anlage an der Wandung der Lagerkappen hält und ein Mitlaufen der auf der Welle sitzenden Dichtscheibe verhindert.

Die Dichtwirkung läßt sich noch dadurch verbessern, daß die Dichtscheiben an ihrem Außenumfang der Steigung der Lagerkappenwand entsprechend angeschrägt sind.

Anhand eines in der Zeichnung dargestellten Ausführungsbeispieles wird der Anmeldungsgegenstand nachfolgend näher beschrieben. Es zeigt:

Fig. 1 ein als Kalottenlager ausgebildetes Gleitlager,
Fig. 2 ein Gleitlager in einem zylindrischen Lagerkörper.

Mit 1 und 2 sind zwei Lagerkappen bezeichnet, die jeweils einen radial vorstehenden Umlaufrand 3 bzw. 4 aufweisen und durch Umbördeln ihrer Umlaufränder miteinander verbunden sind. Zwischen den beiden Umlaufrändern 3 und 4 ist eine Lagerschale 5 mit ihrem radialen Umfangsrand 6 eingeklemmt. Als Lagerkörper wird eine Kalotte 7 zwischen einer an der Lagerschale 5 ausgebildeten Anlagefläche und einer an der einen Lagerkappe 2 abgestützten Klemmhülse 8 gehalten. Die Lagerschale 5 und die Klemmhülse 8 bilden somit die Lageraufnahme. In dem zwischen der Lagerschale 5 und der Klemmhülse 8 liegenden Raum ist ein ölgetränkter Filzkörper als Schmiermitteldepot 9 am Außenumfang der Kalotte 7 angeordnet.

Die Lagerkappen 1 und 2 sind von ihren Stirnseiten ausgehend konisch erweitert, weisen somit in dem an ihre ebene Stirnseite angrenzenden Bereich einen stetig zunehmenden Durchmesser auf. In die Lagerkappen 1 und 2 sind Dichtscheiben 10 und 11 eingesetzt, deren Durchmesser etwas größer als der Innendurchmesser der jeweiligen Lagerkappen 1 bzw. 2 an der in der Ebene der betreffenden Kalottenstirnseite liegenden Stelle ist. Damit ist sichergestellt, daß die Dichtscheiben 10 und 11 beim Einlegen in die Lagerkappen 1 und 2 in einem bestimmten Abstand zu den Stirnseiten der Lagerkappen 1 und 2 liegen und durch die Kalotte 7 etwas nach außen gedrückt werden können. Hierbei legen sich die Dichtscheiben 10 und 11 mit ihrem Umfangsrand 12 bzw. 13 satt an der sich konisch erweiternden Wandung der Lagerkappen 1 und 2 an und dichten den Innenraum des von den Lagerkappen 1 und 2 gebildeten Lagergehäuses ab. Infolge der beschriebenen Bemessung des Durchmessers der Dichtscheiben 10 und 11 liegen diese auch fest an den Kalottenstirnseiten an, so daß auch an dieser Stelle eine gute Abdichtung erreicht wird.

Beim Anpressen des Umfangsrandes 12 bzw. 13 der Dichtscheiben 10 und 11 wird der Umfangsrand leicht nach innen umgebogen. Infolge der Materialelastizität besteht eine den Umfangsrand 12 bzw 13 stets in Anlage an der Wandung der Lagerkappen 1 und 2 haltende Spannung. Durch die satte Anlage der Dichtscheiben 10 und 11 werden diese ausreichend gegen ein Verdrehen gesichert.

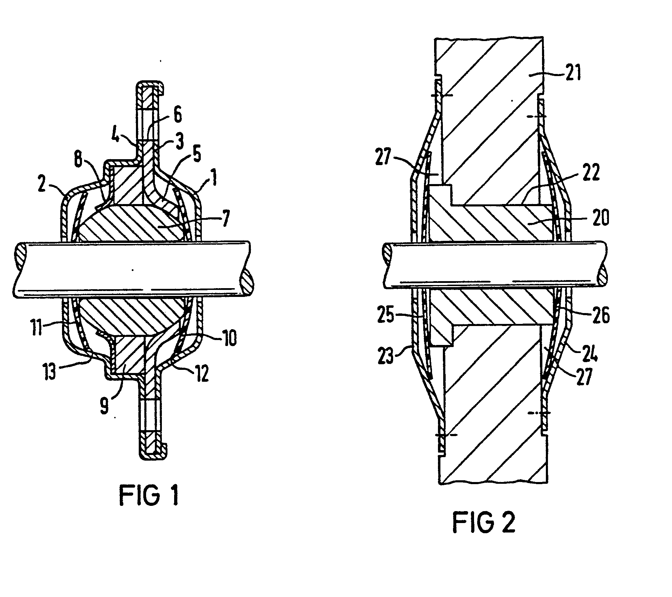

Bei dem in Fig. 2 dargestellten Gleitlager ist eine zylindrisch ausgebildete Buchse 20 in eine beispielsweis ein einer Gehäusewand 21 vorgesehene, die Lageraufnahmebildende Lagerbohrung 22 eingesetzt. Die axiale Länge der Buchse 20 ist größer bemessen als die Stärke der Gehäusewand 21, so daß die Buchse 20 auf beiden Seiten axial aus der Lagerbohrung 22 worsteht. Auf beiden Seiten der Gehäusewand 21 sind Lagerkappen 23 und 24 angebracht, welche die Buchse 20 nach außen abschirmen und somit ein Lagergehäuse bilden. Die Lagerkappen 23 und 24 weisen ebenso wie die Lagerkappen 1 und 2 des Kalottenlagers in dem an ihre ebene Stirnseite angrenzenden Bereich einen stetig zunehmenden Durchmesser auf. Auf jeder Stirnseite der Buchse 20 ist jeweils eine Dichtscheibe 25 bzw. 26 angeordnet, deren Durchmesser etwas größer als der Innendurchmesser der jeweiligen Lagerkappe 23 bzw. 24 an der in der Ebene der betreffenden Stirnseite der Buchse 20 liegenden Stelle ist.

Damit werden die Dichtscheiben 25 und 26 heim Anbringen der Lagerkappen 23 und 24 zwischen der jeweiligen Stirnseite der Buchse 20 und der Innenseite der betreffenden Lagerkappe 23 bzw. 24 etwas verspannt, so daß die Dichtscheiben 25 und 26 mit ihrem Umfangsrand fest an dem konisch erweiterten Teil der Lagerkappe 23 und 24 anliegen. Hierdurch wird der zwischen der Gehäusewand 21 und den Dichtscheiben 25 und 26 liegende Raum 27 nach außen abgedichtet und kann somit als Depotraum für ein Schmiermittel genutzt werden. Infolge der Verspannung der Dichtscheiben 25 und 26 sind diese wiederum ausreichend gegen ein Verdrehen gesichert.

Besonders vorteilhaft ist es, Dichtscheiben zu verwenden, die aus einem abriebfesten Kunststoff bestehen. Infolge der hohen Abriebfestigkeit bleibt die zwischen der drehenden Welle und den Dichtscheiben 10, 11 bzw. 25, 26 bestehende Abdichtung über eine lange Betriebsdauer voll erhalten. Der Kunststoff hat außerdem gute Gleiteigenschaften, so daß die Reibungsverluste zwischen den Dichtscheiben und der Welle entsprechend klein sind.

## Patentansprüche

1. Gleitlager, dessen Lagerkörper in einer Lageraufnahme angeordnet und bei dem zu beiden Seiten der Lageraufnahme den Lagerkörper (7, 20) nach außen abschirmende, ein Lagergehäuse bildende Lagerkeppen (1, 2 bzw. 23, 24) vorgesehen sind, welches Lager ferner ein Schmiermitteldepot (9) aufweist und bei dem en jeder Stirnseite des Lagerkörpers (7, 20) zwischen diesem und der Innenstirnseite der jeweiligen Lagerkappe (1, 2 bzw. 23, 24) eine Dichtscheibe (10,11 bzw. 25, 26) eingefügt ist, dadurch gekennzeichnet, daß die Lagerkappen (1, 2 bzw. 23, 24) in dem an ihre ebene Stirnseite angrenzenden Bereich einen stetig zunehmenden Durchmesser aufweisen, daß die aus einem biegeelastischen Materiel bestehenden Dichtscheiben (10, 11 bzw. 25, 26) zwischen der jeweiligen Stirnseite des Lagerkörpers (7 bzw. 20) und der Innenseite der betrerfenden Lagerkappe (1, 2 bzw. 23, 24) dadurch axial verspannt sind, daß ihr Durchmesser etwas größer als der jeweilige Innendurchmesser der Lagerkappen (1, 2 bzw. 23, 24) an der in der Ebene der Lagerkörperstirnseite liegenden Stelle ist, daß ferner die Dichtscheiben (10, 11 bzw. 25, 26) mit ihrer Bohrung en der durch den Lagerkörper durchgeführten Welle anliegen.

2. Gleitlager nach Anspruch 1, dadurch gekennzeichnet, daß die Dichtscheiben (10, 11 bzw. 25, 26) aus einem abriebfesten Kunststoff bestehen.

3. Gleitlager nach Anspruch 1 oder 2, dadurch gekennzeichnet, daß die Dichtscheiben (10, 11 bzw. 25, 26) an ihrem Außenumfang der Steigung der Lagerkappenwand entsprechend angeschrägt sind.

## Claims

1. Sliding contact bearing of which the bearing body is disposed in a bearing retainer and in which there are provided on either side of the bearing retainer bearing caps (1, 2 and 23, 24 respectively) which externally shield the bearing body (7, 20) and form a bearing housing, the said bearing further comprising a lubricant reservoir (9), a sealing disc (10, 11 and 25, 26 respectively) being inserted at each end of the bearing body (7, 20) between the latter and the internal end face of the respective bearing cap (1, 2 and 23, 24 respectively), characterised in that the bearing caps (1, 2 and 23, 24 respectively) have a constantly increasing diameter in the region adjoining their plane end face, in that the sealing discs (10, 11 and 25, 26 respectively) consisting of a resilient material are axially clamped between the respective end face of the bearing body (7, 20) and the inside face of the respective bearing cap (1, 2 and 23, 24 respectively) owing to the fact that their diameter is somewhat larger than the respective internal diameter of the bearing caps (1, 2 and 23, 24 respectively) at the point situated in the plane of the end face of the bearing body, and further in that the sealing discs (10, 11 and 25, 26 respectively) lie with their bore in contact with the shaft extending through the bearing body.

2. Sliding contact bearing according to claim 1, characterised in that the sealing discs (10, 11 and 25, 26 respectively) consist of an abrasion-resistant plastic.

3. Sliding contact bearing according to claim 1 or 2, characterised in that the sealing discs (10, 11 and 25, 26 respectively) are bevelled at their rim in correspondence with the slope of the wall of the bearing cap.

## Revendications

1. Palier lisse, dont le corps est disposé dans un logement de palier et dans lequel il est prévu, des deux côtés du logement de palier, des chapeaux de palier (1, 2 ou 23, 24), qui protégent extérieurement le corps de palier (7, 20) et forment un carter de palier qui comporte en outre une réserve (9) d'agent lubrifiant et dans lequel une rondelle d'étanchéité (10, 11 ou 25, 26) est insérée contre chaque face frontale du corps de palier (7, 20) entre ce dernier et la face frontale intérieure du chapeau de palier respectif (1, 2 ou 23, 24), caractérisé par le fait que les chapeaux de paliér (1, 2 ou 23, 24) possèdent, dans la zone jouxtant leur face frontale plane, un diamètre qui augmente de façon continue, que les rondelles d'étanchéité (10, 11 ou 25, 26) réalisées en un matériau présentant une élasticité de flexion sont enserrées axialement par la face frontale respective du corps de palier (7 ou 20) et la face intérieure du chapeau de palier correspondant (1, 2 ou 23, 24), de sorte que leur diamètre est légèrement supérieur au diamètre intérieur respectif des chapeaux de palier (1, 2 ou 23, 24), à l'emplacement situé dans le plan de la face frontale du corps de palier, et qu'en outre les rondelles d'étanchéité (10, 11 ou 25, 26) s'appliquent, par leur perçage, contre l'arbre traversant le corps de palier.

2. Palier lisse suivant la revendication 1, caractérisé par le fait que les rondelles d'étanchéité (10, 11 ou 25, 26) sont réalisées en une matière plastique résistante à l'usure par frottement.

3. Palier lisse suivant la revendication 1 ou 2, caractérisé par le fait que les rondelles d'étanchéité (10, 11) comportent, sur leur pourtour extérieur, un biseau correspondant à la pente de la paroi des chapeaux de palier.

FIG 1

FIG 2